# EUROPÄISCHE PATENTSCHRIFT

(11) **EP 0 755 815 B1**
(45) Veröffentlichungstag und Bekanntmachung des Hinweises auf die Patenterteilung: **13.10.1999**
(21) Anmeldenummer: 96111640.7
(22) Anmeldetag: 18.07.1996
(51) Int. Cl.: B60J 7/06

(54) **Faltdach für Fahrzeuge**
Foldable roof for vehicle
Toît pliant pour véhicule

(30) Priorität: 22.07.1995 DE 19526879
(43) Veröffentlichungstag der Anmeldung: 29.01.1997
(73) Patentinhaber: WEBASTO KAROSSERIESYSTEME GmbH, D-82131 Stockdorf (DE)
(72) Erfinder: Birndorfer, Robert, 82362 Weilheim (DE); Richter, Christian, 81249 München (DE); Nowak, Manfred, 86859 Igling (DE); Aldersley, Nicholas, 80686 München (DE)
(74) Vertreter: Wiese, Gerhard

(56) Entgegenhaltungen:
- DE-A- 3 816 977
- FR-A- 708 152

## Beschreibung

Die Erfindung betrifft ein Faltdach für Fahrzeuge zum wahlweisen Verschließen oder mindestens teilweisen Freigeben einer in einer festen Dachfläche ausgebildeten Dachöffnung mit einem faltbaren Verdeck, dessen vorderes Ende mit einem vorderen Endspriegel verbunden ist, der entlang in Fahrzeuglängsrichtung verlaufenden Führungsschienen verstellbar geführt ist und der in der Schließstellung des Daches mit seiner Vorderkante an ein dachfestes Widerlager angedrückt ist gemäß dem Oberbegriff des Patentanspruchs 1.

Ein Faltdach der eingangs genannten Art ist aus DE 40 41 763 C1 bekannt. Bei diesem Faltdach ist der vordere Endspriegel auf zwei Schlitten befestigt, die mit jeweils einem von einem Motor angetriebenen Antriebskabel gekoppelt sind. Die Schlitten sind jeweils über einen vom vorderen Ende des Schlittens abstehenden Führungszapfen und einen vom hinteren Bereich des Schlittens abstehenden Gleitschuh in seitlich entlang der Dachöffnung verlaufenden Führungsbahnen verschiebbar geführt. Die Führungsbahnen sind an ihrem vorderen Ende nach unten abgewinkelt, und in der Schließstellung des Daches bewegt sich der Führungszapfen in der Führungsbahn in dieses mit Bezug auf die restliche Führungsbahn tieferliegende Ende. Dadurch wird der an dem Schlitten befestigte vordere Endspriegel im Bereich seines vorderen Randes nach unten in Richtung auf eine entsprechende Anlagefläche des Dachrahmens abgesenkt.

Um bei dem aus DE 40 41 763 C1 bekannten Faltdach dafür zu sorgen, daß der vordere Rand des vorderen Endspriegels mit einer angemessenen Schließkraft gegen die Anlagefläche des Dachrahmens gepreßt wird, ist ein hohes Drehmoment des Dachantriebsmotors erforderlich. Ein hohes Antriebsdrehmoment ist jedoch aus sicherheitstechnischen Gründen bedenklich, da die eventuell auftretende Einklemmkraft dann gleichfalls groß ist. Außerdem werden in einem solchen Fall entweder ein relativ großer Dachantriebsmotor und/oder eine im Hinblick auf die Verstellgeschwindigkeit unerwünscht große Untersetzung zwischen dem Motor und den Antriebskabeln notwendig.

Aus der US-A-5,114,208 ist ein Faltdach bekannt, bei dem der vordere Endspriegel mittels eines Hilfshebels durch eine zusätzliche schräg nach unten geneigte Führungsbahn in der Endlage verstärkt gegen das Widerlager gedrückt wird. Die erforderliche Antriebskraft ist aufgrund des Neigungswinkels der Führungsbahn von weniger als 30° gegen die Horizontale immer noch sehr hoch

Demgemäß ist es eine Aufgabe der vorliegenden Erfindung, ein Faltdach der eingangs genannten Art zu schaffen, bei dem für eine hohe Anpreßkraft des vorderen Randes des vorderen Endspriegels gegen eine Anlagefläche des Dachrahmens gesorgt ist, ohne daß ein hohes Drehmoment des Antriebsmotors erforderlich ist.

Diese Aufgabe wird bei der vorliegenden Erfindung durch die Merkmale des Patentanspruchs 1 gelöst. Dadurch gelöst, daß in den Führungsschienen jeweils ein Schlitten geführt ist, der über einen Hebel mit dem vorderen Endspriegel gekoppelt ist, und daß der Hebel mittels einer zusätzlichen Führungsbahn derart geführt ist, daß er im Verstellbereich des Faltdachs zwischen der Offenstellung und einer Zwischenstellung nahe der Schließstellung eine rein translatorische Bewegung ausführt und im Bereich zwischen der Zwischenstellung und der Schließstellung eine kombinierte Translations- und Rotationsbewegung ausführt, erfolgt in Verbindung mit dem schwach geneigten ersten Abschnitt und dem stark geneigten zweiten Abschnitt der zusätzlichen Führungsbahn ein Bewegungsablauf, bei dem die Schließkraft des Antriebs durch den Kniehebeleffekt auf ein Vielfaches ansteigt. Während der Verstellbewegung des Daches zwischen der Offenstellung und der Zwischenstellung wird dadurch auf den vorderen Endspriegel nur Kraft in einer Richtung parallel zu den Führungsschienen ausgeübt. Während der Verstellbewegung des Daches zwischen der Zwischenstellung und der Schließstellung hingegen wird die auf den Endspriegel aufgebrachte Kraft zunehmend statt in einer Richtung parallel zu den Führungsschienen in einer Richtung senkrecht zum Fahrzeugdach aufgebracht, wodurch bei gleichbleibendem Motordrehmoment für eine erhöhte Anpreßkraft der Vorderkante des vorderen Endspriegels gegen eine entsprechende Anlagefläche des Dachrahmens gesorgt wird. Von der Erfindung sollen auch Ausführungsformen umfaßt sein, die mehr als zwei Bahnabschnitte aufweisen, wobei deren Neigungswinkel in Richtung auf die Schließposition kontinuierlich zunimmt. Ferner kann als Grenzfall auch ein einziger kurverförmiger Bahnabschnitt vorgesehen sein, dessen Krümmung sich in Richtung auf die Schließposition hin vorzugsweise kontinuierlich erhöht.

Weitere Ausgestaltungen der Erfindung ergeben sich aus den Unteransprüchen.

Insbesondere kann das Faltdach so ausgelegt sein, daß das schlittenseitige Hebelende über den gesamten Verstellbereich des Faltdachs parallel zu den Führungsschienen verschiebbar geführt ist, und daß das spriegelseitige Hebelende im Verstellbereich zwischen der Offenstellung und der Zwischenstellung ebenfalls parallel zu den Führungsschienen verschiebbar geführt ist und dieses im Verstellbereich zwischen der Zwischenstellung und der Schließstellung entlang einer Bahn verstellbar geführt ist, die mit Bezug auf die Bewegungsbahn des schlittenseitigen Hebelendes divergierend nach unten verläuft. Auf diese Weise erfährt der Hebel während der Verstellung des Daches zwischen der Offenstellung und der Zwischenstellung keine Rotation sondern nur eine Translation, wohingegen er während der Verstellung des Daches zwischen der Zwischenstellung und der Schließstellung bei abnehmender Translation eine zunehmende Rotation erfährt.

In an sich bekannter Weise können die Schlitten auf beiden Dachseiten mit jeweils einem Antriebselement wie z.B. einem Antriebskabel, gekoppelt sein. Die beiden Schlitten wiederum können mit dem vorderen Endspriegel über jeweils einen Spriegelträger verbunden sein, der in seinem vorderen Bereich ein Lager für das spriegelseitige Hebelende aufweist.

Der Schlitten kann in seinem hinteren Bereich eine Auflage aufweisen, um die der Spriegelträger in Abhängigkeit von der Rotationsbewegung des Hebels schwenkt. Auf diese Weise wird der Spriegelträger bei einer Verstellung des Schlittens auf diesem mitgeführt, und es entsteht keine zusätzliche Reibung zwischen dem Spriegelträger und den Führungsschienen.

In weiterer Ausgestaltung der Erfindung kann der Hebel als Kniehebel ausgebildet sein, von dessen beiden Enden Lagerzapfen in entgegengesetzte Richtungen abstehen. Auf dieses Weise können die beiden Lagerzapfen in Führungsbahnen geführt werden, die quer zu der Bewegungsrichtung des Daches nebeneinander liegen. Werden ferner beide Hebelenden im Verstellbereich zwischen der Offenstellung und der Zwischenstellung des Dachs auf gleicher Ebene geführt, so kann die Führung des spriegelseitigen Hebelendes in diesem Verstellbereich mittels derjenigen Führungsschiene erfolgen, in welcher der Schlitten und somit auch das schlittenseitige Hebelende geführt wird.

Ist weiterhin das Faltdach so ausgebildet, daß die Führungsbahn für das spriegelseitige Hebelende im Verstellbereich zwischen der Zwischenstellung und der Schließstellung des Daches zunächst einen leicht nach unten abfallenden, relativ langen Bahnabschnitt und daran vorne anschließend einen steil nach unten abfallenden, relativ kurzen Endabschnitt aufweist, wird für eine besonders wirkungsvolle Anpressung Vorderkante des vorderen Endspriegels in der Schließstellung des Faltdachs gesorgt.

Bevorzugte Ausführungsbeispiele der Erfindung werden im folgenden unter Bezugnahme auf die beiliegenden Zeichnungen im Detail beschrieben. Es zeigen:
F 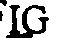 . 1 eine schematische perspektivische Ansicht eines Fahrzeugdachs;
F 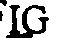 . 2 eine schematische Seitenansicht einer erfindungsgemäßen Dachmechanik;

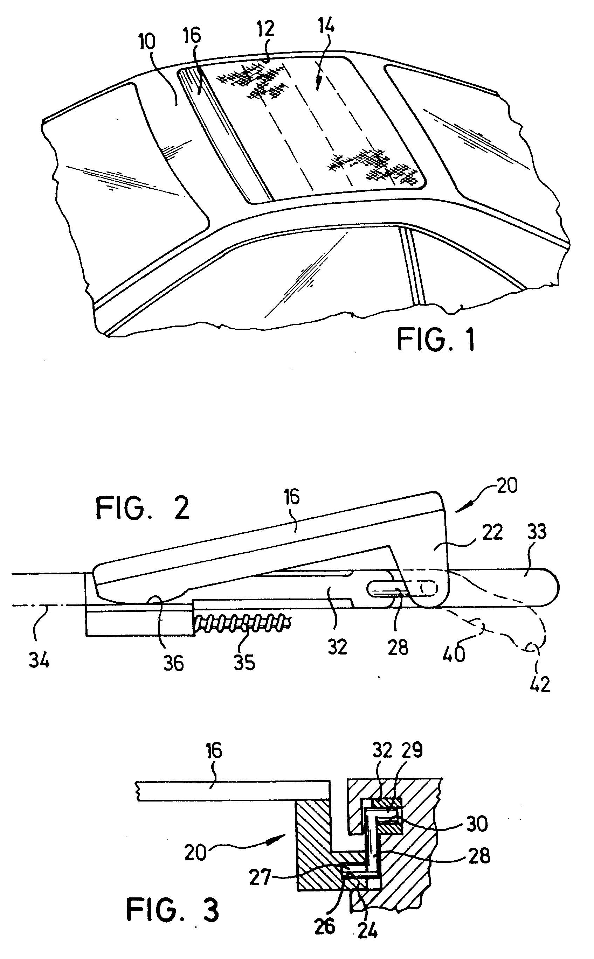

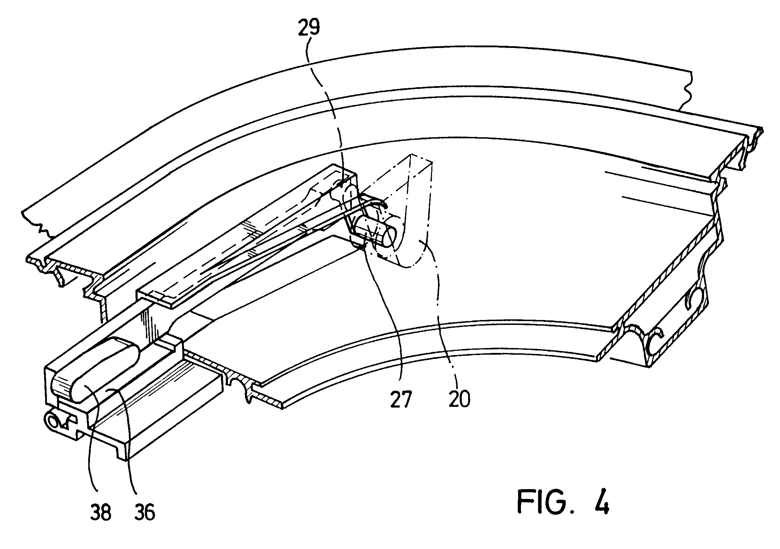

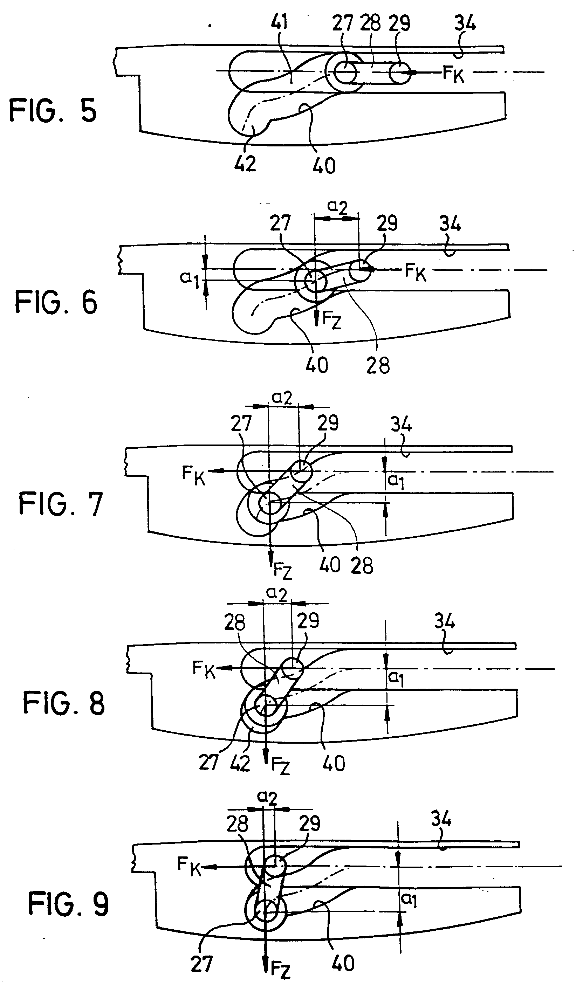

Fig. 3 eine Querschnittansicht der in F 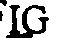 . 2 gezeigten Mechanik in der Schließstellung;
F 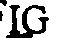 . 4 eine perspektivische Teilansicht eines zur Aufnahme der in F 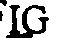 . 2 gezeigten Dachmechanik geeigneten Dachrahmens; und
F 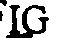 . 5 bis 9 schematische Ansichten, welche die Kraftumsetzung während des Schließvorgangs des Faltdachs veranschaulichen.

Die in F 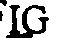 . 1 schematisch gezeigte feste Dachfläche 10 eines Fahrzeugs weist eine Dachöffnung 12 auf, die mittels eines faltbaren Verdecks 14 wahlweise verschlossen oder mindestens teilweise freigelegt werden kann. Das faltbare Verdeck 14 ist an seinem vorderen Ende an einem vorderen Endspriegel 16 befestigt. Der Endspriegel wird in bekannter Weise entlang Führungsschienen (in F 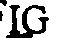 . 1 nicht dargestellt) geführt, die in Fahrzeuglängsrichtung entlang beider Seiten der Dachöffnung verlaufen.

F 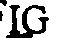 . 2 zeigt eine schematische Seitenansicht der zum Verstellen des vorderen Endspriegels 16 benutzten Mechanik. Der vordere Endspriegel 16 ist beidseitig auf je einem Spriegelträger 20 montiert, der an seinem vorderen Ende (dem rechten Ende in F 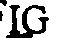 . 2) einen nach unten abstehenden Ansatz 22 aufweist. Unter gleichzeitiger Bezugnahme auf F 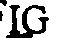 . 3, die einen Querschnitt der in F 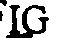 . 2 gezeigten Mechanik in der Schließstellung zeigt, weist der Ansatz 22 auf der dem Dachrahmen zugewandten Seite einen Gleitbolzen 24 auf, der mit einer zentralen Bohrung 26 versehen ist. Die Bohrung 26 bildet ein Lager für einen Lagerzapfen 27 eines Kniehebels 28, dessen anderer Lagerzapfen 29 in einer Bohrung 30 gelagert ist, die im vorderen Ende eines Schlittens 32 ausgebildet ist. Der Schlitten 32 wird in einer Führungsbahn 33 einer Führungsschiene 34 geführt. Die Führungsbahn 33 verläuft parallel zu der Dachfläche in Fahrzeuglängsrichtung. In F 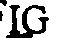 . 2 ist außerdem das Ende eines Antriebskabels 35 angedeutet, das entweder direkt oder über ein separates Kabelendstück an dem Schlitten 32 befestigt ist.

Der Schlitten 32 ist als ein langgestrecktes Bauteil ausgebildet, dessen Länge in etwa der des vorderen Endspriegels 16 entspricht. Am hinteren Ende des Schlittens 32 ist eine Auflage 36 ausgebildet, auf der sich der Spriegelträger 20 mit einem von dessen hinterem Ende in Richtung auf die Führungsschiene 34 abstehenden Gleitschuh 38 abstützt. Der Gleitschuh 38 ist so geformt, daß er einerseits ein Verkippen des Spriegelträgers 20 erlaubt, daß er andererseits jedoch den Spriegelträger 20 in der Führungsschiene 34 führt. In den F 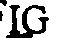 . 2 und 3 ist ferner eine weitere Führungsbahn 40 zu sehen, in welche der Gleitbolzen 24 des Spriegelträgers 20 gegen Ende des Schließvorgangs des Faltdachs einläuft. Ein erster Bahnabschnitt 41 der Führungsbahn 40 weist gegenüber der Führungsschiene 34 einen flachen Neigungswinkel von etwa 10° bis 20° , vorzugsweise 15° auf Der Endabschnitt 42 der Führungsbahn 40 fällt steil nach unten ab, um einen Verriegelungsbereich für den vorderen Endspriegel 16 zu bilden, wie im folgenden näher erläutert wird. Der Endabschnitt 42 weist gegenüber der Führungsschiene einen Neigungswinkel von etwa 72° bis 82°, vorzugsweise etwa 77° auf.

Die F 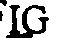 . 5 bis 9 zeigen schematisch den Schließvorgang des bisher beschriebenen Faltdachs, wobei zur Vereinfachung der Beschreibung im wesentlichen nur die beiden Führungsbahnen 33 und 40 und der Kniehebel 28 dargestellt sind. Wie aus den F 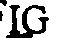 . 5 bis 9 ersichtlich ist, läuft gegen Ende des Schließvorgangs des Faltdaches der Gleitbolzen 24 mit dem darin geführten spriegelseitigen Lagerzapfen 27 des Kniehebels 28 auf der Führungsbahn 40 nach unten. In der Schließstellung steht der Gleitbolzen 24 an der tiefsten Stelle seiner Bewegungsbahn in dem Endbereich 42 der Führungsbahn 40. Der vordere Endspriegel 16 wurde somit um den Gleitschuh 38 verschwenkt, und die Vorderkante des Endspriegels 16 wurde dabei abgesenkt, um gegen eine nicht dargestellte Anlagefläche des Dachrahmens angepreßt zu werden.

Die in F 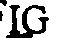 . 5 dargestellte Stellung des Kniehebels 28 entspricht der eingangs erwähnten Zwischenstellung. Diese Zwischenstellung markiert den Übergang, an dem die rein translatorische Bewegung des Kniehebels 28 in eine kombinierte Translations- und Rotationsbewegung übergeht. Der Kniehebel 28 nimmt im gesamten Verstellbereich des Faltdaches zwischen der Offenstellung und der Zwischenstellung die in F 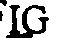 . 5 gezeigte Lage ein, wobei sich die beiden Lagerzapfen 27 und 29 des Kniehebels auf gleicher Höhe befinden. In dem genannten Verstellbereich wirkt daher die von dem Antriebskabel 35 über den Schlitten 32 auf den Kniehebel 28 aufgebrachte Zugkraft F 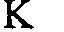 einzig in einer Richtung parallel zu der Führungsschiene 34. An der Zwischenstellung trennen sich die Führungsbahnen 33 und 40 für das spriegelseitige Hebelende bzw. das schlittenseitige Hebelende. Der schlittenseitige Lagerzapfen 29 wird weiterhin entlang der geraden Führungsbahn 33 geführt, während der spriegelseitige Lagerzapfen 27 entlang der Führungsbahn 40 nach unten läuft.

In der in F 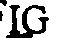 . 6 gezeigten Stellung hat der spriegelseitige Lagerzapfen 27 des Kniehebels 28 die Zwischenstellung bereits überschritten. Der Kniehebel 28 ist nun mit seinem spriegelseitigen Lagerzapfen 27 leicht nach unten verkippt. Die über den Schlitten 32 auf den Kniehebel 28 aufgebrachte Kabelzugkraft F 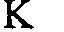 erzeugt aufgrund der sich ständig vergrößernden Verhältnisses der Hebelarme a₁ / a₂ eine senkrecht nach unten wirkende Komponente F 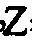 , die auch als Schließkraft bezeichnet werden kann, welche mit zunehmendem Verkippen des Kniehebels ansteigt. In der Endstellung wird daher die Vorderkante des vorderen Endspriegels 16 mit hoher Kraft gegen eine Anlagefläche des Dachrahmens angepreßt, ohne daß dafür ein hohes Drehmoment des Dachantriebsmotors nötig wäre. Bei der dargestellten Ausführungsform entsteht beispielsweise bei einer konstanten, vom Motor aufgebrachten Kraft F_{K} von beispielsweise 125 N eine vertikale Schließkraft F_{Z}, die von der Fig. 6 bis zur Position in Fig. 9 von 34 N auf 550 N ansteigt.

Für das Einklemmen von Körperteilen oder Gegenständen ist der Bereich zwischen der Zwischenstellung und der Schließstellung weitestgehend unkritisch, da der Spalt zwischen Vorderkante des Endspriegels 16 und der festen Dachfläche in der Zwischenstellung bereits so eng ist, daß ein Einklemmen kaum noch möglich ist.

Die Führungsschiene 34 kann auch etwas länger als in den Zeichnungen dargestellt ausgebildet werden, so daß der Kniehebel 28 beim Schließen des Daches die Stellung, in der er senkrecht zu der Führungsschiene 34 steht, überläuft. Auf diese Weise kann dafür gesorgt werden, daß der vordere Endspriegel 16 in der Schließstellung in einer Totpunktlange 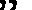 verrastet" wird.

Es versteht sich, daß der vordere Endspriegel 16 einteilig mit dem Spriegelträger 20 ausgebildet sein kann. Da sich das hier beschriebene Faltdach jedoch leichter auf unterschiedliche Fahrzeugdächer anwenden läßt, wenn der Endspriegel 16 und der Spriegelträger 20 als separate Bauteile angefertigt werden, wird diese 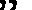 zweiteilige" Ausführungsform bevorzugt.

### Bezugszeichenliste

- 10: feste Dachfläche
- 12: Dachöffnung
- 14: faltbares Verdeck
- 16: vorderer Endspriegel
- 20: Spriegelträger
- 22: Ansatz
- 24: Gleitbolzen
- 26: Bohrung (spriegelseitiges Lager)
- 27: spriegelseitiger Lagerzapfen
- 28: Kniehebel
- 29: schlittenseitiger Lagerzapfen
- 30: Bohrung (schlittenseitiges Lager)
- 32: Schlitten
- 33: Führungsbahn
- 34: Führungsschiene für Schlitten
- 35: Antriebskabel
- 36: Auflage
- 38: Gleitschuh
- 40: Führungsbahn für Gleitbolzen des Spriegelträgers
- 41: flacher Abschnitt von 40
- 42: Endabschnitt von 40
- F_{K}: horizontale Kraft
- F_{Z}: vertikale (Schließ-)Kraft
- a₁: Hebelarm von F_{K}
- a₂: Hebelarm von F_{Z}

## Patentansprüche

1. Faltdach für Fahrzeuge zum wahlweisen Verschließen oder mindestens teilweisen Freigeben einer in einer festen Dachfläche (10) ausgebildeten Dachöffnung (12) mit einem faltbaren Verdeck (14), dessen vorderes Ende mit einem vorderen Endspriegel (16) verbunden ist, der entlang in Fahrzeuglängsrichtung verlaufenden Führungsschienen (34) verstellbar geführt ist und der in der Schließstellung des Daches mit seiner Vorderkante an ein dachfestes Widerlager angedrückt ist, wobei in den Führungsschienen (34) jeweils ein Schlitten (32) geführt ist, der über einen Hebel (28) mit dem vorderen Endspriegel (16) gekoppelt ist, und wobei der Hebel (28) in einer Führungsbahn (40) derart geführt ist, daß er im Verstellbereich des Faltdachs zwischen der Offenstellung und einer Zwischenstellung nahe der Schließstellung eine rein translatorische Bewegung ausführt und im Bereich zwischen der Zwischenstellung und der Schließstellung eine kombinierte Translations-und Rotationsbewegung ausführt, **dadurch gekennzeichnet**, daß die Führungsbahn (40) für das spriegelseitige Hebelende im Verstellbereich zwischen der Zwischenstellung und der Schließstellung des Daches wenigstens zwei Bahnabschnitte (41,42) aufweist, wobei der Neigungswinkel gegen die Horizontale des der Schließposition am nächsten gelegenen Endabschnitts (42) steiler ist als der eines diesem vorgelagerten Bahnabschnitts (41).

2. Faltdach nach Anspruch 1, **dadurch gekennzeichnet**, daß die Schlitten (32) aufbeiden Dachseiten mit jeweils einem Antriebselement (35) gekoppelt sind.

3. Faltdach nach Anspruch 2, **dadurch gekennzeichnet**, daß die beiden Schlitten (32) mit dem vorderen Endspriegel (16) über jeweils einen Spriegelträger (20) verbunden sind, der in seinem vorderen Bereich ein Lager für das spriegelseitige Hebelende aufweist.

4. Faltdach nach Anspruch 3, **dadurch gekennzeichnet**, daß der Schlitten (32) in seinem hinteren Bereich eine Auflage (36) aufweist, um die der Spriegelträger (20) in Abhängigkeit von der Rotationsbewegung des Hebels (28) schwenkt.

5. Faltdach nach einem der vorhergehenden Ansprüche, **dadurch gekennzeichnet**, daß beide Hebelenden im Verstellbereich zwischen der Offenstellung und der Zwischenstellung des Daches auf gleicher Ebene geführt sind.

6. Faltdach nach einem der vorhergehenden Ansprüche, **dadurch gekennzeichnet**, daß der Hebel (28) als Kniehebel ausgebildet ist, von dessen beiden Enden Lagerzapfen (27,29) in entgegengesetzte Richtungen abstehen.

7. Faltdach nach Anspruch 6, **dadurch gekennzeichnet**, daß die beiden Lagerzapfen (27, 29) in Führungsbahnen (33, 40) geführt sind, die quer zu der Bewegungsrichtung des Daches nebeneinander liegen.

8. Faltdach nach einem der vorhergehenden Ansprüche, **dadurch gekennzeichnet**, daß der leicht nach unten abfallende Bahnabschnitt (41) der Führungsbahn (40) mit der Führungsbahn (33) für das schlittenseitige Hebelende einen Winkel von 10° bis 20°, vorzugsweise von etwa 15°, einschließt.

9. Faltdach nach einem der vorhergehenden Ansprüche, **dadurch gekennzeichnet**, daß der steil nach unten abfallende Endabschnitt (42)der Führungsbahn (40) mit der Führungsbahn (33) für das schlittenseitige Hebelende einen Winkel von 72° bis 82°, vorzugsweise von etwa 77°, einschließt.

## Claims

1. A folding roof for vehicles for optionally closing or at least partially opening a roof aperture (12) constructed in a fixed roof surface (10) and having a foldable covering (14), the front end of which is connected to a front end hoop (16) which is guided for displacement along guide rails (34) extending in the longitudinal direction of the vehicle and which, when the roof is in the closed position, has its front edge applied against an abutment rigid with the roof, whereby there is guided in the guide rails (34) a slide member (32) which is coupled by a lever (28) to the front end hoop (16), the lever (28) being so guided in a guide track (40) that in the range of displacement of the folding roof between the open position and a midway position close to the closed position it performs a purely translatory movement and in the range between the midway position and the closed position, it performs a combined translatory and rotary movement, characterised in that the guide track (40) for the end of the lever which is towards the hoop having, in the range of adjustment between the midway position and the closed position of the roof, at least two track portions (41, 42), the angle of inclination in respect of the horizontal of the end portion (42) which is closest to the closed position being steeper than that of a track portion (41) which precedes it.

2. A folding roof according to Claim 1, characterised in that the sliding members (32) are on both sides of the roof coupled to respective drive elements (35).

3. A folding roof according to Claim 2, characterised in that the two sliding members (32) are connected to the front end hoop (16) via respective hoop carriers (20) in the front part of which there is a bearing for the end of the lever which is towards the hoop.

4. A folding roof according to Claim 3, characterised in that the sliding member (32) has in its rear portion a support (36) about which the hoop carrier (20) pivots as a function of the rotary movement of the lever (28).

5. A folding roof according to one of the preceding Claims, characterised in that both lever ends are guided on the same plane in the displacement range between the open position and the midway position of the roof.

6. A folding roof according to one of the preceding Claims, characterised in that the lever (28) is constructed as a elbow lever from the two ends of which bearing journals (27, 29) project in opposite directions.

7. A folding roof according to Claim 6, characterised in that both bearing journals (27, 28) are guided in guide tracks (33, 34) which are situated beside each other crosswise to the direction of movement of the roof.

8. A folding roof according to one of the preceding Claims, characterised in that the slightly downwardly inclined track portion (41) of the guide track (40) encloses with the guide track (33) for the lever end which is towards the sliding member, an angle of 10 to 20 and preferably about 15.

9. A folding roof according to one of the preceding Claims, characterised in that the steeply downwardly inclined end portion (42) of the guide track (40) encloses with the guide track (33) for the end of the lever which is towards the sliding member, an angle of 72 to 82 and preferably about 77.

## Revendications

1. Toit pliant pour véhicules afin de fermer ou d'au moins libérer partiellement, à volonté, une ouverture de toit (12) réalisée dans une surface de toit (10) fixe, comprenant :
- une capote (14) pliable, dont l'extrémité avant est reliée à un arceau d'extrémité avant (16) guidé de façon réglable le long de glissières de guidage (34) s'étendant dans la direction longitudinale du véhicule et qui, dans la position de fermeture du toit, est pressé par son arête avant sur un contre-appui fixe par rapport au toit,
- un chariot (32) étant guidé dans chaque glissière de guidage (34) couplé, par l'intermédiaire d'un levier (28), à l'arceau d'extrémité avant (16), et
- le levier (28) étant guidé dans une piste de guidage (40) de manière que, dans la plage de réglage du toit pliant, entre la position d'ouverture et une position intermédiaire, proche de la position de fermeture, il effectue un déplacement de pure translation et que, dans la zone se trouvant entre la position intermédiaire et la position de fermeture, il effectue un mouvement combiné de translation et de rotation,
caractérisé en ce que
la piste de guidage (40), destinée à l'extrémité de levier située du côté de l'arceau, dans la plage de réglage entre la position intermédiaire et la position de fermeture du toit, présente au moins deux tronçons de piste (41, 42), l'angle d'inclinaison par rapport à l'horizontale du tronçon d'extrémité (42), situé le plus près de la position de fermeture, étant plus raide que celui d'un tronçon de piste (41) situé à l'avant de celui-ci.

2. Toit pliant selon la revendication 1,
caractérisé en ce que
les chariots (32) prévus sur les deux côtés du toit sont chacun couplés à un élément d'entraînement (35).

3. Toit pliant selon la revendication 2,
caractérisé en ce que
les deux chariots (32) sont reliés à l'arceau d'extrémité avant (16), chaque fois par l'intermédiaire d'un support d'arceau (20) qui présente, dans sa zone avant, un palier destiné à l'extrémité de levier située côté arceau.

4. Toit pliant selon la revendication 3,
caractérisé en ce que
le chariot (32) présente, dans sa zone arrière, une plateforme (36) autour duquel le support d'arceau (20) pivote en fonction du mouvement de rotation du levier (28).

5. Toit pliant selon l'une des revendications précédentes,
caractérisé en ce que
les deux extrémités de levier sont guidées sur le même plan, dans la plage de réglage, entre la position d'ouverture et la position intermédiaire du toit.

6. Toit pliant selon l'une des revendications précédentes,
caractérisé en ce que
le levier (28) est réalisé sous la forme de levier à genouillère, des deux extrémités duquel des tourillons de palier (27, 29) font saillie dans des directions opposées.

7. Toit pliant selon la revendication 6,
caractérisé en ce que
les deux tourillons de palier (27, 29) sont guidés dans des pistes de guidage (33, 40) qui sont situées l'une à côté de l'autre, transversalement par rapport à la direction de déplacement du toit.

8. Toit pliant selon l'une des revendications précédentes,
caractérisé en ce que
le tronçon de piste (41), allant légèrement en descendant de la piste de guidage (40) fait, avec le tronçon de guidage (33), destiné à l'extrémité de levier située du côté du chariot, un angle de 10° à 20°, de préférence d'environ 15°.

9. Toit pliant selon l'une des revendications précédentes,
caractérisé en ce que
le tronçon d'extrémité (42), allant en descendant de façon abrupte de la piste de guidage (40), fait avec la piste de guidage (33), destinée à l'extrémité de levier située côté chariot, un angle de 72° à 82°, de préférence d'environ 77°.
